Europäisches Patentamt

(19) European Patent Office

Office européen des brevets

(11) Publication number: **0 135 714 B1**

# (12) EUROPEAN PATENT SPECIFICATION

(45) Date of publication of patent specification: **06.11.91**   (51) Int. Cl.5: **C05G 3/00, C05C 11/00, C05G 3/02**

(21) Application number: **84108953.5**

(22) Date of filing: **27.07.84**

(54) Sustained release compositions for biologically active materials.

(30) Priority: **28.07.83 US 518281**

(43) Date of publication of application:
**03.04.85 Bulletin 85/14**

(45) Publication of the grant of the patent:
**06.11.91 Bulletin 91/45**

(84) Designated Contracting States:
**AT BE CH DE FR GB IT LI NL SE**

(56) References cited:
**AU-B- 528 086       DE-A- 1 945 108**
**DE-A- 3 034 062     FR-A- 2 014 277**
**FR-A- 2 513 542     US-A- 3 898 071**

(73) Proprietor: **MELAMINE CHEMICALS, INC.**
**P.O. Box 748**
**Donaldsonville Louisiana 70346(US)**

(72) Inventor: **Allan, G. Graham**
**18411 60th Place N.E.**
**Seattle Washington 98155(US)**

(74) Representative: **Vossius & Partner**
**Siebertstrasse 4 P.O. Box 86 07 67**
**W-8000 München 86(DE)**

Rank Xerox (UK) Business Services

## Description

This invention relates to compositions containing biologically active substances useful in agriculture, which provide for the slow release and sustained action of the biologically active substances. More particularly, the invention relates to a granular product that is formulated for the slow release of a biologically active substance such as a herbicide or other pesticide for use in crop production. This granular product can be applied to the soil using conventional equipment. It is formulated to provide substantial plant nutrient nitrogen values.

There is a continuing search and need for improved agricultural chemicals and formulations containing them. In the fertilizer field, for example, while ammonium nitrate, containing 34% N, still ranks second only to ammonia, 82% N, as a source of fertilizer nitrogen, its use generally has been decreasing, in terms of market percentage, since 1965. The reason is the increased use of the higher nitrogen content materials, ammonia, with 82% N, and urea, with 46% N, respectively. The use of urea is a development of recent years, and may have been prompted in part by a desire to reduce shipping costs.

These nitrogen fertilizer materials just mentioned are readily soluble in water. They are therefore subject to leaching, and their use results in a rapid release of their nitrogen. Since this necessitates repeated applications for sustained growth, or one application with higher leaching losses, there have been many developments relating to slow release nitrogen fertilizer materials. Generally such materials sacrifice nitrogen content for some degree of control over nitrogen availability.

Melamine and its hydrolysis products, ammeline, ammelide, and cyanuric acid, and as well the related material dicyandiamide (cyanoguanidine), have often been considered as potential sources of nitrogen for incorporation in fertilizer compositions or for utilization as nitrogen sources per se. Melamine and dicyandiamide each have a nitrogen content of over 66%, so that about two thirds of their weight is nitrogen. If melamine could be used as a fertilizer material, it would obviously provide a good deal of nitrogen per unit weight applied.

Unfortunately, commercially produced melamine is available only as a fine crystalline powder, or as an aqueous slurry of the particulate melamine. It is usually manufactured in the form of very fine crystals because small size particles are required for the present commercial end markets for melamine, such as, for example, the production of melamine-formaldehyde resins and the production of fire retardant paints. A typical screen analysis for one commercially available dry melamine product is as follows:

| Screen Analysis, μm | Percent Retained |
|---|---|
| > 420 | 0-0.1 |
| 297 - 420 | 0-0.1 |
| 250 - 297 | 0-0.3 |
| 177 - 250 | 0.5-5.0 |
| 149 - 177 | 1.0-5.0 |
| 74 - 149 | 13-30 |
| 44 - 74 | 13-30 |
| > 44 | 40-60 |

Other commercially available melamine products may be somewhat coarser, but the majority of the particles remain smaller than 420 μm. The fine particle sizes of commercial dry crystalline melamine, as currently produced, make it impractical to use as such, as a fertilizer material. The smallest particles are very fine and powdery, and their sizes are most difficult to measure.

Until recently, investigations into the possible use of melamine as a fertilizer nitrogen source had led to negative, ambiguous, and inconsistent results. The overall picture presented by the prior art would not lead one skilled in the art to use or even try melamine and its salts and related compounds ammeline, ammelide, and cyanuric acid as fertilizers. There are too many other materials that are readily available, time tested, and known to perform well and be free of toxicity. Moreover, melamine currently commands a premium price compared to most competitive products.

A somewhat related agricultural chemical problem is the formulation of biocides, plant growth regulants, and other biologically active materials for slow or controlled rate release. Biocides include such pesticides as insecticides, herbicides, and fungicides.

One basic purpose of slow release formulations of biocides is to extend the time between repeat

EP 0 135 714 B1

applications and thus effect a saving on the cost of the labor involved in an application. A second important purpose is to improve the effectiveness of a biocide by a sustained but efficacious release at a slow rate over a period of time, rather than the prior art inefficient technique of several applications over a period of time, with concomitant short periods of high biocide concentration and effectiveness and long periods of low or zero concentration.

Controlled release of pesticides permits extended time intervals between treatments and reduction of the dosage level for a given effect over a period of time, thus reducing environmental impact. Thus, from an ecological standpoint, the controlled release of pesticides enhances the lifetime of a non-persistent agent at the site of treatment.

For slow growing crops such as trees, when only fertilizer is applied, weeds that compete with seedlings may be stimulated to grow to such an extent as to crowd the seedlings severely. Thus the positive effects expected from fertilization may be negated by the vigorous growth of weeds that compete with the trees for vital water, light, and nutrients. Also, if fertilizer materials such as urea and/or ammonium salts are applied in sufficient quantity so that the effects can be observed over a significant period of time, not only is fertilization inefficient but also there may be toxic effects because of salt stress. Avoiding this by multiple, small applications often is not practical for tree crops.

There are a few patents and publications that assert that melamine and at least some of its hydrolysis products are useful as fertilizer materials. Typically, however, such assertions are not supported by data nor by evidence obtained from field testing. Rather, such assertions seem to be prophetic, representing wishful thinking, for when testing has been done, often the conclusions have been negative. Thus, compare the factually unsupported statements in patents: U.S. 1,870,346, GB 605,829, and DE 928,835, with the negative views reported after testing in: Hayase, 1967, "On the slowly available nitrogen fertilizers". Part 1, pp. 129, 302, 303; Bull. Nat. Inst. Agr. Sci. (Japan), Series B, No. 18; in Japanese, with English summary.

In 1964, Hauck and Stephenson published an article in Agricultural and Food Chemistry 12, 147-151, describing the rate at which symmetrical triazines converted in the soil to a form useful to plants. What the authors refer to as granules of melamine, acid, and metal ions were prepared by forming dried pastes of the several materials, then crushing and screening. Such materials included mixtures, for example, of melamine and phosphoric acid, melamine and nitric acid, and melamine and ferric ammonium sulfate. The authors concluded with generally negative observations.

South African patent 735,583 discloses nitrogenous fertilizer salt compositions comprising a cation exchange resin having a nitrogen base such as melamine chemically bound thereto. The patent also points out that certain slow release nitrogen sources, such as urea-formaldehyde resins, have been combined with a fast release nitrogen fertilizer material, such as a nitrate, to provide a greater initial fertilizing effect.

While work was being done to investigate the use of melamine and its hydrolysis products as sources of fertilizer nitrogen, with the advantage of slow, prolonged release of fertilizer nitrogen, others were working to develop controlled release forms of biologically active materials. The desired controlled release of biocides has previously been achieved by their incorporation within a polymeric matrix, e.g., encapsulation wherein for example a pest control agent is surrounded by an enveloping polymeric wall that permits loss through diffusion, permeation or degradation; dispersion of the pesticide in an elastomer or a plastic wherein the pesticide is released through leaching or diffusion; or chemical combination of the pesticide with a polymer in such a manner that the appended pesticide is slowly released from the polymeric backbone upon exposure to the pest infested environment. However, the prior art approaches often fall short of what is desired, in one or more respects. Also, they tend to be expensive, and some of the polymeric materials suggested for use are either not biodegradable or degrade so slowly that it is not a useful property.

U.S. Patent 3,074,845 discloses sustained action, biologically active compositions, such as insecticides, fungicides, herbicides, nematocides, and other biocides, and plant growth regulators. The biologically active material is formulated with an inert carrier material and an amino-aldehyde resin. The formulation is prepared by first impregnating the inert carrier material with the biologically active substance, coating the impregnated carrier material with the amido-aldehyde resin, and then polymerizing the resin in situ. Suitable resins include urea-formaldehyde, melamine-formaldehyde, and urea-melamine-formaldehyde resins.

U.S. Patent No. 3,223,513 discloses similar sustained release compositions in which the biologically active material is mixed with monomeric amido and monomeric aldehyde reactants, and then the reactants are polymerized to form an amido-aldehyde resin in situ. When the biologically active material and the resin-forming reactants are combined, an occlusion of the active material with the resin is obtained, which in physical form is sieve-like or sponge-like in structure with the molecules of active material in the interstices of the polymer.

Belgian Patent No. 885,166 discloses a simple physical mixture of fine particles of (1), melamine that

3

EP 0 135 714 B1

has been recrystallized to remove certain phytotoxic impurities therefrom and (2), a controlled release form of 2,4-dichlorophenoxyacetic acid (2,4-D). The preferred controlled release form of 2,4-D is prepared by intimately mixing or melting together equal parts by weight of kraft lignin and 2,4-D and extruding the resulting mixture in pellet or flake form of the desired size.

More recently, U.S. Patent No. 4,283,387 discloses controlled release biologically active compositions similar to those disclosed in U.S. 3,223,513 mentioned above.

A mixture comprising a carbinol-containing organic polymer, crosslinking agents for the polymer, and a biologically active substance undergoes hydrolysis to form a polymeric network capable of controlling the release of the biologically active substance.

A different approach appears in U.S. 3,172,752. In one embodiment, a herbicide, fungicide, or insecticide is mixed with activated sewage sludge. The mixture is then adsorbed into pores, some of which are capillary, in particles of expanded perlite. The particles are then sprayed with a urea-formaldehyde solution, which forms a very slowly soluble sheath about each particle upon curing and drying.

In accordance with one embodiment of the present invention, granular compositions are prepared that provide a slow release source of a biologically active substance (BAM) on or under the surface of the soil. The granules may be prepared by known techniques and may be in the form of agglomerates or prills. For some purposes, large blocks may be desired.

The broad concept of the invention is that a biologically active material (BAM) in intimate admixture with particles of a nitrogen source such as melamine, for example, made up in granular form, is protected from the degradative effects of sunlight and oxygen, the leaching effect of water, the volatilization effects of wind and sun, as well as the microbiological breakdown initiated by microorganisms, so that its useful life is thereby extended. In place of melamine, the other poorly soluble nitrogen sources already mentioned may be used, such as benzoguanamine, dicyandiamide, ammeline, ammelide, cyanuric acid, mixtures thereof, their and melamine's physiologically acceptable inorganic and organic salts, and mixtures thereof. Melamine and its salts are the preferred nitrogen source materials.

The granular compositions of the present invention comprise a BAM, preferably in the form of a particulate solid, a binder, and a source of slow release fertilizer nitrogen characterized by poor solubility in pH 7 water at 20° C and by slow conversion in the soil to a form in which it is useful to plant life growing in the soil. The slow release nitrogen source is selected from the group consisting of melamine and the other related materials already mentioned. Any BAM may be employed which does not interfere with the dissolution of the nitrogen source and the action on it of microorganisms to produce nitrogen in a form that is of nutrient value to plant life.

The binder, for holding the particles of biologically active substance and the particles of the nitrogen source together, in granular form preferably has plant nutrient value. The binder may be a readily soluble fertilizer material supplying nitrogen, in a preferred embodiment. If, however, the binder is a water-insoluble or only slightly or poorly soluble material, then the binder itself may be another slow release source of nitrogen or it may have no nutrient value.

The granular products must have strength, size and weight suitable for mechanical dispensing and application to and into the soil. The granular products are preferably prepared in the form of agglomerates, prills or flakes.

Thus, in a preferred embodiment, the invention is a solid granular composition for use as a source of a biologically active material that is released slowly to the soil upon application of the composition thereto. This composition comprises a mixture of: (a) a biologically active material; (b) a particulate source of fertilizer nitrogen that is characterized by a particle size of 2 mm or less, preferably 0.4 mm or less, poor solubility in pH 7 water at 20° C, and that is selected from the group consisting of melamine and the other poorly soluble nitrogen materials already mentioned; and (c) a binder that holds the mixture in solid form. An inert filler may also be used.

The solid granules into which the composition is formed protect the BAM while permitting the release of the BAM slowly so as to extend the time period during which it is effective over a substantially longer period than if it were applied directly to the soil, alone.

The granules may be from 1 mm. to 10 mm. in size for convenience in applying using ordinary mechanical equipment of the type used for granular fertilizers, or as large as a salt lick block, for a similar purpose, i.e., the administration of a medicament, or other biologically active material, to livestock.

In a more specific preferred embodiment, the granular repository composition comprises a mixture of: (a) a BAM having herbicidal properties; (b) particulate melamine having particle sizes predominantly less than about 400 micrometers, and (c) a urea binder that holds the BAM and the melamine particles in granular form. This embodiment of the composition comprises: from about 1% or less up to about 30% by weight of the herbicide, and generally, not more than about 7.5%; from about 10% to about 95%, and more

4

EP 0 135 714 B1

generally from 40% to 80%, by weight of particulate melamine; and from about 15% to about 90% and more generally from 20% to 60%, by weight of the urea binder.

In another more specific preferred embodiment, the granular repository composition comprises a mixture of: (a) a particulate herbicidal material in an amount up to 10% but preferably only up to 7.5% by weight of the composition; (b) particulate melamine having a particle size predominantly less than 400 micrometers, the melamine being present in an amount in the range from 10% to 99%, and more generally from about 80% to 95% by weight of the composition, and (c) a resin binder that holds said mixture in granular form and that generally comprises from about 1% to 10%, but preferably 2% to 10%, or more preferably, 4% to 6%, by weight of the composition.

The term "granular" is employed herein to refer to both agglomerates and prills. Agglomerates are formed by mechanically bonding fine particles together using a binder. Often the binder is applied as an aqueous solution, and dried to cause binding. Urea and similar binders may also be annealed, for increased strength. Screening and recycling may be used to achieve desired sizes. Prills may be formed by mixing fine particles in a molten binder material, then chilling drops of the mixture. The term "granular" most often is used in connection with agglomerates and prills that are generally spherical in shape, but also encompasses such products having other shapes, such as flakes and shavings.

The term "poorly water soluble" refers to materials that dissolve in water at 20° C, pH 7, to the extent of 5 grams per 100 grams, or less; that is, materials that form solutions of 5% or less concentration.

The term "slightly water soluble" refers to materials that dissolve in water at 20° C, pH 7, to the extent of 1 gram per 100 grams or less; that is, materials that form solutions of 1% or less concentration.

The term "readily water soluble" refers to materials that dissolve in water at 20° C, pH 7, to the extent of 20 grams per 100 grams or more, that is, materials that form solutions of 20% or greater concentration.

Similar terms should be understood to have similar meanings. For example, the expression "poor water solubility" is used to refer to materials that are "poorly water soluble", as defined above.

Based on available information, the solubilities in water at 20° C, pH 7, for several materials useful in connection with this invention, in grams per 100 grams of water are:

TABLE I

| Material | Solubility (g/100g) |
|---|---|
| Melamine | 0.50 |
| Benzoguanamine | 0.06 (22° C) |
| Dicyandiamide | 2.26 (at 13° C) |
| Ammeline | 0.008 |
| Ammelide | less than 0.008 |
| Cyanuric Acid | 0.27 |
| Melamine Nitrate | 0.85 |
| Ammonium Nitrate | 192 |
| Ammonium Sulfate | 75.4 |
| Diammonium Phosphate | 131 (at 15°) |
| Potassium Acid Sulfate | 51.4 |
| Potassium Sulfate | 11.1 |
| Urea | 119.3 (at 25° C) |

The term "annealing" is used to refer to a heating-cooling process that is useful for increasing the crush strength of granular agglomerates where the binder is urea or a similar material that can be heated to become tacky or molten, then cooled to harden. With a urea binder, for example, the granules are heated above the melting point of urea, generally to a temperature in the range from about 135° C to about 150° C , for a short period of time, sufficient to permit the urea to soften, but not long enough that the granular shape deteriorates. Subsequent cooling to ambient temperature produces a very hard granule.

In referring to particle sizes, the term "diameter" is used, as it commonly is, to refer to the largest dimension of a particle, even though the particle is not spherical in shape.

Fig. 1 is a graph depicting the results observed when several differently formulated herbicidal compositions were applied to the soil to evaluate their respective efficacies in controlling weeds, in which graph the horizontal axis represents the time in weeks following the application date, and the vertical axis represents the percentage of the soil surface that is obscured by the foliage growth of weeds, when the soil surface is observed in top plan view;

5

Fig. 2 is a graph depicting the growth increases observed in Douglas fir seedlings, as measured in weeks following the application of the same several differently formulated herbicidal compositions;

Fig. 3 is a bar chart that demonstrates the differences in the percentages of soil surface that is obscured by the foliage growth of weeds at a date 24 weeks after the treatment date with said same several herbicidal compositions, and

Fig. 4 is a bar chart that demonstrates the differences in growth increase observed in Douglas fir seedlings, at a date 24 weeks after the treatment date with said same several herbicidal compositions.

In the embodiment of the present invention where the composition is prepared in granular form, the processes used for making the granular products are similar to those disclosed in Australian Patent 534 003, modified however to accomplish the incorporation in the granules of the biologically active substance, which is generally a biocide, and preferably a herbicide, most preferably one that has selective toxicity for weeds. A specific example is described in the preparation example hereinbelow.

The nitrogen source is selected from the group consisting of melamine, benzoguanamine, dicyandiamide, ammeline, ammelide, cyanuric acid, mixtures thereof, their inorganic salts, their organic salts, and mixtures thereof. These salts are preferably selected from the group consisting of the hydrochloride, hydroiodide, metaphosphate, nitrate, orthophosphate, orthophosphate dihydrate, polyphosphate, potassium dihydrogen phosphate, bisulfate, and sulfite, and, as well, the cyanurate, chloroacetate, and formate salts, and mixtures thereof. All of these materials are characterized by poor or slight solubility in pH 7 water at 20° C, and by slow conversion in the soil to a form in which the nitrogen is useful to plant life growing in the soil.

These nitrogen source materials, as ordinarily available commercially or as prepared, are in the form of very fine particles. In the case of melamine, for example, the commercially available product typically has crystalline particles that are smaller in size than 2 mm., and almost all of which are smaller than about 400 micrometers. Melamine as presently available commercially, from one source, is a very fine, powdery, light material, having the screen analysis reported above. For the purposes of the present invention, even extremely fine particles of melamine can be used, hence, no lower limit on particle size is specified. The same is true of the materials that may be used in place of melamine. Even very fine particles are useful in the practice of this invention.

The biologically active material (BAM) suitable for use in the present invention include any of the common biologically active substances, such as herbicides, insecticides, fungicides, pesticides, nematocides, other biocides, and plant growth regulators, and the like.

Among the more common pesticides that are contemplated for use are those named below:

Herbicides

inorganic
amides
arsenicals
carbamates
thiocarbamates
dinitroanilines
carboxylic acid derivatives
organophosphorus compounds
quaternary and other organics
substituted ureas
triazine derivatives
phenoxy compounds
fluorinated compounds

Insecticides

carbamates
organophosphorus compounds
pyrethroids
chlorinated hydrocarbons

Fungicides

dithiocarbamates
heterocyclic fungicides
halogenated fungicides

The following specific materials are expected to be useful in the timed release systems of the invention:

Pesticides Contemplated for Use

Aatrex
Acephate
Alachlor
Aldicarb

6

EP 0 135 714 B1

Aldrin
Allethrin
Allidochlor
Allyl alcohol
Allyldimethyloctylpiperidinium bromide
Ametryne
Aminocarb
Aminotriazole
Amitraz
Ammonium ethyl aminocarbonylphosphonate
Ammonium sulfamate
Ancymidol
Anilazine
Asulam
Atrazine
Azinphos-ethyl
Azinphos-methyl
Aziprotryne
Barban
Basalin
Benazolin
Bendiocarb
Benfluralin
Benodanil
Benomyl
Bensulide
Bentazone
Benzoximate
Benzoylprop-ethyl
Benzthiazuron
Benzyl dibutylthiocarbamate
Benzyl di-isopropyl phosphorothioate
Bifenox
Benapacryl
Bioallethrin
Bis(tributyltin)oxide
Bladex
Blasticidin-S
Borax
Bromacil
Bromofenoxim
Bromophos
Bromophos-ethyl
Bromopropylate
Bromoxynil
Bromoxynil octanoate
Brompyrazone
Bronopol
Bufencarb
Bupirimate
Butacarb
Butachlor
Butoxyethoxyethyl thiocyanate
Buturon
Butylate
Butyldihydroisopropylisothiazolopyrimidinone
Butylisobutylideneaminomethylthiotriazinone
Butylphenyl methylcarbamate

7

Butylthiadiazolylhydroxymethylimidazolidone
Cacodylic acid
Camphechlor
Captafol
Captan
Carbaryl
Carbendazim
Carbetamide
Carbofuran
Carbophenothion
Carboxin
Chloramben
Chloranil
Chlorbromuron
Chlorbufam
Chlordane
Chlordimeform
Chlorfenac
Chlorfenethol
Chlorfenprop-methyl
Chlorfenson
Chlorfenvinphos
Chlorflurecol-methyl
Chlormephos
Chlormequat
Chloroacetic acid
Chlorobenzilate
Chlorobenzyl diethylthiocarbamate
Chlorochlorodifluoromethylthiophenyldimethylurea
Chloroneb
Chlorophenylthiomethyl dimethyl phosphorodithioate
Chloropicrin
Chloropropylate
Chlorothalonil
Chloroxuron
Chlorphonium
Chlorpropham
Chlorpyrifos
Chlorpyrifos-methyl
Chlorquinox
Chlorthal
Chlorthiamid
Chlorthiophos
Chlortoluron
Cotoran
Crotoxyphos
Crufomate
Cyanazine
Cyanomethylethylaminooxoethyl diethyl phosphorothioate
Cycloate
Cycloheximide
Cyclohexyldimethylaminomethyltriazinedione
Cyclooctyldimethylurea
Cyhexatin
Dacthal
Dalapon
Daminozide
Dazomet

8

2,4-DB
DDT
Demephion
Demeton
Demeton-methyl
Demeton-S-methylsulphon
Desmedipham
Desmetryne
Dialifos
Di-allate
Diallylchloroacetamide
Diazinon
Dibromochloropropane
Dicamba
Dichlobenil
Dichlofenthion
Dichlofluanid
Dichlone
Dichlorobenzene
Dichlorobis(ethylphenyl)ethane
Dichlorodihydroxydiphenylmethane
Dichlorophenyl ethyl phenylphosphonothioate
Dichlorophenylisopropylcarbamoylhydantoin
Dichlorophenyl methoxynitrophenyl ether
Di(chlorophenyl)nitrobutane
Dichloropicolinic acid
Dichloropropane
Dichloropropene
Dichlorprop
Dichlorvos
Dicloran
Dicofol
Dircotophos
Dieldrin
Dienochlor
Diethoxyphosphinyliminodithietane
Diethyl phenylisoxazolyl phosphorothioate
Diefenoxuron
Difenzoquat
Diflubenzuron
Diisopropyl dithiolanylidenemalonate
Diisopropylidenexylohexulofuranosonic acid
Dimefox
Dimethametryn
Dimethirimol
Dimethoate
Di(methoxycarbonyl)propenyl dimethyl phosphate
Dimethylglutaraldehydonitrile methylcarbamoyloxime
Dimethyl methylthiophenyl phosphate
Dimethyltrithianamine
Dimetilan
Dimexan
Dinitramine
Dinobuton
Dinocap
Dinoseb
Dinoseb acetate
Dinoterb

Dioxacarb
Dioxandiyl di(diethyl phosphorodithioate)
Diphenamid
Diphenyl
Dipropetryn
Diquat
Disulfoton
Ditalimifos
Dithianon
Diuron
DNOC
Dodemorph
Doguadine
Drazoxolon
DSMA
Dual
Dursban
Edifenphos
Endosulfan
Endothal
Endothion
Endrin
EPN
EPTC
Erbon
Ethalfluralin
Ethiofencarb
Ethion
Ethirimol
Ethoate-methyl
Ethofumesate
Ethoprophos
Ethoxytrichloromethylthiadiazole
Ethylene glycol bis(trichloroacetate)
Ethylmethylmethylbenzyloxydioxan
Ethylpropyldimethyldinitrobenzenamine
Ethylsulfinylmethyl bis(methylethyl) phosphorodithioate
Ethylsulphonylthiadiazolyldimethylurea
Etrimfos
EXD
Fenaminosulf
Fenamiphos
Fenarimol
Fenbutatin oxide
Fenchlorphose
Fenfuram
Fenitrothion
Fenoprop
Fensulfothion
Fenthion
Fentin acetate
Fentin hydroxide
Fenuron
Fenuron-TCA
Ferbam
Flamprop-isopropyl
Fluometuron
Fluorodifen

EP 0 135 714 B1

Fluotrimazole
Flurecol-butyl
Flurenol
Folpet
Fonofos
Formetanate
Formothion
Fuberidazole
Gamma-HCH
Glyphosate
Glyphosine
Griseofulvin
Guazatine
Halacrinate
HCH
Heptachlor
Heptenophos
Hexachloroacetone
Hexachlorobenzene
Hexaflurate
Hydroxyisoxazole
Indolylbutyric acid
Iodofenphos
Ioxynil
Ioxynil octanoate
Isazophos
Isobornyl thiocyanatoacetate
Isobutyl chlorophenoxyphenoxypropionate
Isocarbamid
Isofenphos
Isonoruron
Isoprocarb
Isopropalin
Isopropylphenyldimethylurea
Isopropylthioethyl dimethyl phosphorodithioate
Isovalerylindandione
Karbutilate
Kasugamycin
Lenacil
Leptophos
Linuron
Lorox
Malathion
Maleic hydrazide
Mancozeb
Maneb
MCPA
MCPB
Mebenil
Mecarbam
Mecoprop
Medinoterb acetate
Mefluidide
Menazon
Mephosfolan
Metacetaldehyde
Metamitron
Methabenzthiazuron

11

Methamidophos
Metham-sodium
Methazole
Methidathion
Methiocarb
Methomyl
Methoprotryne
Methoxybenzodioxaphosphorinthione
Methoxychlor
Methoxydimethylbenzophenone
Methoxyethylmercury chloride
Methoxyethylmercury silicate
Methylarsine bis(dimethyldithiocarbamate)
Methyl dichlorophenoxyphenoxypropanoate
Methylmercury dicyandiamide
Methylthiophenyl dipropyl phospate
Metobromuron
Metolachlor
Metoxuron
Metribuzin
Mevinphos
Molinate
Monalide
Monocrotophos
Monolinuron
Monuron
Monuron-TCA
MSMA
Nabam
Naled
Naphthalic anhydride
Naphthylphthalamic acid
Napropamide
Neburon
Niclosamide
Nicotine
Nitralin
Nitrapyrin
Nitrofen
Nitrotal-isopropyl
Norflurazon
Omethoate
Oryzalin
Oxadiazon
Oxamyl
Oxine
Oxycarboxin
Oxydemeton-methyl
Paraquat
Parathion
Parathion-methyl
Pebulate
Pentachlorophenol
Pentanochlor
Perfluidone
Permethrin
Phenmedipham
Phenobenzuron

Phenothrin
Phenthoate
Phenylbenzoxazinone
Phenyl dimethylphosphorodiamidate
Phenylmercury acetate
Phenylmercury dimethyldithiocarbamate
Phenylmercury nitrate
Phenylphenol
Phorate
Phosalone
Phosfolan
Phosmet
Phosphamidon
Phoxim
Picloram
Piperophos
Pirimicarb
Pirimiphos-ethyl
Pirimiphos-methyl
Polyoxins
Potassium cyanate
Profenofos
Profluralin
Promecarb
Prometon
Prometryn
Propachlor
Propanil
Propargite
Propazine
Propetamphos
Propham
Propineb
Propoxur
Propyzamide
Prothiocarb
Prothoate
Prowl
Pyracarbolid
Pyrazon
Pyrazophos
Pyrethrins
Pyridinitril
Quinacetol sulphate
Quinalphos
Quinomethionate
Quinonamide
Quintozene
Resmethrin
Ronstar
Rotenone
Ryania
Sabadilla
Salicylanilide
Schradan
Secbumeton
Siduron
Simazine

13

EP 0 135 714 B1

Simetryn
Sodium arsenite
Sodium chlorate
Sodium fluoride
Sodium fluoroacetate
Sodium metaborate
Sulfallate
Sulfotep
Swep
2,4,5-T
Tandex
2,3,6-TBA
TCA
Tebuthiuron
Tecnazene
Temephos
TEPP
Terbacil
Terbufos
Terbumeton
Terbuthylazine
Terbutryn
Tetrachlorvinphos
Tetradifon
Tetrahydrophthalimidomethylchrysanthemate
Tetrapropyl dithiopyrophosphate
Tetrasul
Thiabendazole
Thiazafluron
Thiofanox
Thiometon
Thionazin
Thiophanate
Thiophanate-methyl
Thiram
Toluoxypyridazine
Tolylfluanid
Tolyl methylcarbamate
Treflan
Triadimefon
Triallate
Triamiphos
Triazophos
Tributyl phosphorotrithioate
Tributyl phosphorotrithioite
Trichloronate
Trichlorphon
Tricyclazole
Tridemorph
Trietazine
Trifenmorph
Trifluorodinitropropyltoluidine
Triforine
Undecanone
Undecylenic acid
Validamycin A'
Vamidothion
Vernolate

14

Vinclozolin
Xylyl methylcarbamate
Zineb
Zineb-ethylenethiuram disulphide maneb precipitation
Ziram

In addition to pesticides such as these, the invention is a useful way in which to deliver plant growth regulants, such as 2,4-D, maleic hydrazide, and naphthalene acetic acid, to desired sites.

When the BAM is in powder form, as is preferred, it is mixed with dry crystals of melamine (or other similar nitrogen source), then this dry powdered mixture is processed to form granules or blocks. When the BAM is a liquid, it may be sprayed on the melamine, or on a powdered binder material such as urea, or on both, then dried; or it may be mixed with a liquid binder component. It may also be first converted to powder form, then used. Or the BAM, if not in liquid form, in some cases may be converted to a solution or suspension, and used in whole or part as the binder for making a solid product. Preferably the BAM is obtained or converted to fine particulate form, with particle sizes below 2 mm , and more preferably below 400 μm.

In a preferred mode, to make a granular product, the particles of melamine or other similar slow release fertilizer material, and the particles of a BAM, preferably in admixture, are bound together in granular form with a binder material. The binder may be selected from a broad spectrum of materials, but preferably is selected to be compatible with the soil so that it and any residue thereof are either inert, biodegradable, soil-conditioning, or preferably, have plant nutrient value.

Among the preferred binders are those selected from the group consisting of urea, gilsonite, starch, lignin and its derivatives, proteinaceous materials, urea-formaldehyde resins, melamine-formaldehyde resins, and water-soluble latices of synthetic polymeric materials. The binders that have some plant nutrient value are most preferred, such as urea, urea-formaldehyde and melamine-formaldehyde resins. The binder, such as urea, may be obtained from any commercial source and is preferably in the form of a powder.

The binder that is used should produce a granule that is sufficiently strong, upon hardening or curing, to impart to the granule a crush strength of at least 450 grams , as determined by tests on ten granular agglomerates randomly selected, with sizes in the range from 3 mm. to 4 mm., the results being averaged. Preferably, however, the crush strength is at least 900 grams (2 lbs.), and more preferably, 1350 grams .

A crush strength of about 450 grams is comparable to conventional, commercial prilled urea and is adequate strength for use in most forms of commercial application, including broadcast devices, spreaders, planter shank applicators, and for dispensing from airplanes and helicopters. Higher crush strength values guard against breakage, as when the granules are bagged and the bags are stacked, and during handling. A pour density of about 0.64 g/cm$^3$ or more is desirable for aerial application of granules, to minimize drifting.

When a readily soluble material such as urea or a salt, such as ammonium nitrate or potassium dihydrogen phosphate, is employed as the binder for the fertilizer granules, the binder material will disintegrate in the soil rapidly, and release the BAM and the slow release nitrogen source, generally in the form of discrete particles of each, if that was their form when the granules were prepared.

Urea is one preferred binder, not only because it permits the production of granular products with sufficient crush strength, and having suitable weights, sizes and shapes for convenient application to the soil, but also because it is readily soluble and adds a valuable fast release nutrient material to the soil. When urea is used as a binder with fine particles of a source of nitrogen characterized by poor or slight solubility and slow conversion to a useful form of nitrogen in the soil, such as melamine, the urea will dissolve rapidly and release discrete particles of the poorly soluble nitrogen source for slow dissolution and/or slow biodegradation. Other readily soluble, fast release sources of fertilizer nitrogen that can be used in the granule per se or as binders include ammonium sulfate, ammonium phosphate, diammonium phosphate, ammonium nitrate, potassium nitrate, and ammonium chloride. The fast release material, especially if used primarily as a source of fast release nitrogen, preferably will be present in the granular product in an amount such that it provides from about 5% to about 30% by weight of total nitrogen, and preferably, from about 7.5% to about 25% total nitrogen.

When extremely slow release of both BAM and nitrogen is desired, however, the granular product should be prepared using an insoluble or only slightly soluble binder, such as a lignin derivative, a urea-formaldehyde resin, a melamine-formaldehyde resin, or a non-nutrient material such as a phenolic resin, or a natural or synthetic polymer in the form of a latex. Because such a binder material loses binding ability slowly on or in the soil, very slow release of nitrogen is obtained. When a totally insoluble binder is used, the binder remains substantially intact while moisture slowly dissolves the melamine and other material, that is more soluble than the binder, out of the granule.

The granular products may additionally comprise other materials such as potassium, phosphorus, and

EP 0 135 714 B1

micronutrients. Examples of micronutrients include zinc, magnesium, iron, and boron.

The compositions of the present invention generally comprise an amount up to about 30% by weight of the BAM, preferably up to about 20%, and from about 10% to about 95% by weight of melamine or other slow release source of fertilizer nitrogen, preferably 10% to 85%, and more preferably up to about 7.5% or 8% by weight of BAM and from about 40% to about 80% or 95% by weight of the melamine or other source of slow release fertilizer nitrogen material, depending on whether intended for use with a soluble or insoluble binder. When the binder is one preferred material, urea, the amount used is from about 15% to 90% of the granule and preferably from about 15%, preferably 20%, to 60% of the granule. Generally, when the granule is a prill and the binder is urea, more urea is present than when the granule is in the form of an agglomerate. When the binder is a poorly soluble or essentially insoluble resin, much less may often be used, i.e., as little as about 4%.

Fertilizer materials and BAMs that are mixed and then prepared in the form of granules using the present invention exhibit good crush strength and have size and weight suitable for mechanical dispensing to the soil.

The granules preferably have a size in the range of from about 1 mm. to about 10 mm., and more preferably, from about 3 mm. to about 5 mm. Preferably, the granules in the 3 mm. to 4 mm. size range exhibit an average crush strength of at least 450 grams , and more preferably, at least 1350 grams.

The granular products can be prepared as agglomerates or prills. In a preferred method of agglomeration, particles of the slow release nitrogen source and particles of the BAM are blended together with particles of a suitable binder material, preferably urea, and then are sprayed with water or with an aqueous solution of the binder material, in an agglomerating device such as a disc pelletizer or a rotating drum. When the blend of particles is sprayed with water or binder solution, the particles become tacky and agglomerate. The agglomerates are then dried in air by a conventional technique, as in a hot air oven or fluidized bed, generally at a temperature below the melting point of the binder material. The dried agglomerates preferably are then annealed, if a fusible binder such as urea is employed, at a temperature above the melting point of the urea or other fusible binder material, to enhance their crush strength.

When the binder is urea, annealing is carried out by heating the granules to a temperature above 132° C, generally to a temperature over 135° C, but to a temperature and for a time such that the granular integrity is not lost, then cooling to ambient temperature. Cooling may simply be in air in a pile of the granules, if they are not tacky, or they may be cooled below tacky temperature while tumbling, to retain their granular shapes. Annealed urea-melamine-BAM granules appear to shrink somewhat upon annealing; the reason may be loss of air. Drying, annealing, and cooling can be done in a single, continuous process.

The granules can also be made in the form of prills. In one method of prilling, a mixture of particles of slow release fertilizer nitrogen source and BAM is mixed with molten binder material, such as urea, to form a slurry. Droplets of the molten slurry are solidified by dropping them from a prilling tower using conventional techniques. Alternatively, the slurry may be formed into a solid block, or into flakes. In either case, granules, if desired, may then be formed by suitable granulating techniques, including screening if desired, with recycling of oversize and undersize.

Although the preferred granular products are prepared using the agglomeration or prilling techniques described above, suitable products can be produced by other well-known techniques, such as extrusion, pressing and granulating, and bricquetting. For example, the mixture of slow, prolonged release fertilizer nitrogen source, BAM, and binder material can be pressed at an elevated temperature, then cooled, to cure or harden the binder. The resulting product can be cut into blocks or can be granulated or flaked to form granules of the desired size and shape.

The granular products of the present invention have a number of important advantages. The compositions of the invention are valuable primarily as a prolonged action form of BAM. However, because they contain melamine or the like, and urea or some other binder, they also serve as valuable sources of slow release nitrogen. Because the compositions comprise a source of fertilizer nitrogen characterized by poor or slight solubility and slow conversion to a useful form of nitrogen in the soil, such as melamine, the rate of application of the product in terms of nitrogen applied per acre may be much lower than with standard fertilizer practice. Thus the rate of application for nitrogen fertilizer purposes of a 67/33 melamine-urea granular agglomerate, containing a BAM, may be from 10% to 75% of the rate of application for the entire growing season, based on their total respective nitrogen contents, by weight, of a conventional readily soluble fast release nitrogen fertilizer material that is soluble to the extent of 20 grams or more per 100 grams of pH 7 water at 20° C. Moreover, the melamine can be expected to contribute to the available nitrogen fertilizer during the subsequent growing season. Leaching losses are extremely low, if there are any. Moreover, because of the slow release characteristics of such material, for fertilizer purposes, it is often possible, with many crops, to use only a single application per growing season. The use of such materials

16

has also been found to lead in some cases to a more effective production of agricultural productive units per unit weight of nitrogen applied and per unit of growing area. In addition, the use of such slow release sources of nitrogen often leads to overall yields of productive units of some crops, that are comparable to those obtained following conventional, standard fertilizer practice which uses much higher levels of nitrogen fertilizer application.

Considering the granular vehicle (such as a melamine-urea agglomerate) for the BAM strictly as a fertilizer material, it has the advantages of: (1), essentially eliminating the usual leaching losses of nitrogen that occur when a highly soluble fast release material such as urea is used alone; (2), often requiring only a single application per year; (3), permitting application at a reduced rate as compared to standard fertilizer practice, when calculated as amount of nitrogen applied per area; and (4), entailing substantial savings for packaging, freight, storage and handling, because of reduced overall bulk and weight per amount of effective N.

For example, when urea alone is used as the nitrogen source, standard fertilizer practice in some areas for certain crops might call for the application of 340 kg of N per ha per year, which would be 740 kg of urea, if only urea were used as the source of N. When 33/67 weight ratio urea-melamine-prills of the present invention are used, containing 5% by weight of a BAM, only about 161 kg of N would be required per ha per year to be generally equivalent in performance to the standard fertilizer practice just mentioned for many crops, requiring the application of only about 281 kg of granules of the invention (which offer the added advantage of slow release of the BAM).

Most significantly, the granules of the invention serve to prolong the period of effectiveness of the BAM contained in the granules. The BAM is protected against the degradative effects of sunlight and oxygen, the leaching effect of water, the volatilization effects of wind and sunlight, and the microbiological breakdown by microorganisms in the soil. Thus, the useful activity of the BAM is extended by supplying it to the soil in the granules of the invention.

The granules of the invention may be used by applying them to the surface of the soil, using a conventional spreader, or dropping them from an airplane or helicopter. This is useful for applying herbicides to inhibit the germination of seeds at the surface. It is also useful with certain insecticides. For example, granules applied to a lawn and containing an insecticide will have a beneficial fertilizing effect on the lawn in addition to suppressing annoying insect activity over an extended period of time. The granules may also be applied to the soil surface, then turned under into the root zone, as by plowing, discing, or rototilling. The root zone for most crops generally extends from the surface down about 35 cm. Distribution of granules in the root zone is particularly useful where the BAM in the granules is a systemic insecticide or fungicide. However delivered, the granules should be distributed as discrete granules, separate from each other, to permit the maximum effect of moisture and microorganisms on each granule.

The amount of granules applied may be enough to furnish the total long term fertilizer nitrogen for an entire growing season. A primary advantage of this process, and of the use of granular BAM prepared in accordance with the invention, is that the rate of application of total fertilizer nitrogen in some cases may be less than one-half of that needed to achieve comparable results when ammonium sulfate is employed as the sole source of nitrogen and is applied as a solution through an irrigation sprinkler system.

The fertilizer value in the granules of the invention is useful in a process for increasing the productive units from a crop that responds to such fertilizer nitrogen. The term "productive units" is used to refer to the desired crop product. This process comprises furnishing at least 50%, and preferably about 90%, of that nitrogen in the form of a particulate fertilizer nitrogen source selected from the group of poorly soluble materials described above, in combination with a binder that is formed from a soluble or fast-release standard nitrogen fertilizer material such as urea or ammonium nitrate.

The granular product of the invention permits the application of both the slow release and fast release sources of nitrogen in a single application of granules, along with the BAM. This process is believed to be useful for increasing the desired yield of productive units from such diverse crops as trees, food grain, feed grain, legumes, fiber crops, vegetable oil and nut oil yielding crops, root crops, tuber crops, tree fruits including citrus fruits, tree nuts, vine fruits, bush fruits, commercial vegetable crops, commercial melon crops, and flowers.

The BAM - and more than one can be inserted in a single granule - also exerts its effect. When the herbicide 2,4-D is used, for example, in granules applied one month or more before planting, the repository (sustained slow release) action of the 2,4-D can be designed to inhibit weed growth for several weeks before and after the planting date, thus preserving the soil nutrients and moisture to be available for the desired crop.

Since each herbicide, pesticide, fungicide, plant growth regulator, and other BAM may have a different, individual rate of application, the formulation of the BAM with other components of the granule may require individual calculations to coordinate the amount of BAM and its rate of application with the amount of melamine or other slow release N material, and its rate of application. Some modern, powerful herbicides, for example, are applied at very small rates, and the percentage in a granule would be very small indeed. Thus, at 2.850 g of BAM per ha, and a desired application rate of melamine of 161 kg, of N per ha in a 67/33 weight ratio melamine-urea prill, the percentage of BAM in the granule would be only about 1%.

A more complete appreciation of the invention will be realized by reference to the following specific examples which relate to specific compositions and methods for preparing granular products. Unless otherwise indicated, all parts and percentages are by weight and all temperatures are in degrees Celsius.

## EXAMPLE 1

### Preparation of Granules with Resin Binder, Containing 2,4-D

A granular product was prepared which comprised 88.1 percent of particulate melamine, 4.7 percent of the herbicide 2,4-D, and 7.2 percent of resin binder.

The granules were prepared as follows. The melamine particles and particles of 2,4-D were dry mixed. The mixture was placed in a 16" (40 cm) pan-type agglomerator. As the pan was rotated, the powder mixture was sprayed with an aqueous solution of UCAR 368 latex, a commercially available polyvinyl acetate latex that had been reduced to about 25% concentration of solids to reduce viscosity and facilitate application. The damp granules thus formed were dried in a low temperature oven (less than 93° C).

The melamine used in this and the following examples was the commercially available product of Melamine Chemicals, Inc., Donaldsonville, Louisiana. It was a fine white crystalline powder having a screen analysis substantially as reported above for commercially available melamine. The powder was 99.9 percent pure, with a maximum moisture content of 0.1 percent, a maximum ash content of 0.01 percent, and a density of about 1.57 g/ml. The granular product had a crush strength of about 1,000 grams.

Similarly, granules can be made up including, as active ingredients, halophenylaliphatic acids, halophenoxyaliphatic acids, halo-substituted benzoic acids, polyhalogenated aliphatic acids, and polysubstituted picolinic acids.

## EXAMPLE 2

### Preparation of Granules with Urea Binder, Containing 2,4-D

A granular product was prepared which comprised 71 percent of particulate melamine, 5 percent of the herbicide 2,4-D, and 24 percent of urea as the binder material.

The granules were prepared as follows. A powdery mixture was made of the melamine, urea, and 2,4-D. To produce urea of the proper, fine particle size for this purpose, urea prills were ground. This mixture was placed in the same pan agglomerator used in Example 1, then sprayed with water. The damp granules produced in the agglomerator were then dried in the low temperature oven. The granular product exhibited a crush strength of about 500-600 grams.

### EXAMPLE 3

### Pot Tests Using Example 1 Granules - Alfalfa Seeds

The effectiveness of these granular materials in preventing the germination of alfalfa seeds was used as an assay of the continued performance of the 2,4-D admixed with the melamine compositions. As long as significant quantities of 2,4-D are present, alfalfa seed will not germinate completely. When the alfalfa seeds receiving the treatment germinate comparably to seeds which received no treatment, the period of effectiveness of the 2,4-D has ended.

Alfalfa seeds (1 gram) were planted on the surface of sieved unsterile compost soil in $2\frac{1}{2}$ in. x $2\frac{1}{2}$ in. (6.3 cm x 6.3 cm) plastic pots. Each test pot stood in a plastic saucer in order to avoid contamination between pots. After introduction of the seeds, the pots were well watered from the top and covered with another plastic dish until germination was established. This avoided unnecessary drying out of the soil and maintained an intimate moist atmosphere for seed germination. All test pots were kept in a controlled temperature room at 70° F for the duration of the trial. After germination was established the covers were removed to avoid any restriction of seedling growth. Seeds and plants were monitored daily, watered evenly as necessary, and growth changes recorded.

A series of four pot treatments was set up as follows:

(a) control pots to which no chemical was applied;

(b) 2,4-D alone (applied at a rate equivalent to 22.7 kg of 2,4-D/ ha );

(c) 2,4-D/melamine granules of Example 1 (applied at a rate equivalent to 22.7 kg of 2,4-D/ha ); and

(d) melamine granules (not containing 2,4-D) in an amount equal to that used in treatment (c).

The melamine/binder ratio was essentially the same in the granules used in treatments (c) and (d), the difference being in the presence or absence of 2,4-D. The granules were used by distributing them over the soil surfaces in the pots.

For each treatment, replicates of three pots were set up in four groups (A), (B), (C) and (D) so that alfalfa seeds could be planted on undisturbed soil for each of the following three weeks. All pots in each series were treated equally from the outset with respect to applied material, watering and light. The experiment was started when the treatments were applied to all of the pots by sprinkling the applied material on the surface of the soil, and pots (A) were planted. One week later, alfalfa seeds were planted in pots (B). Another week later, pots (C) were planted with alfalfa seeds and finally three weeks after application of the chemicals, pots (D) were planted with alfalfa seeds.

The pots in the four groups of pots A, B, C and D thus were treated at the same time, some pots receiving treatment (a): no chemical applied, to provide a control; some treatment (b): 2,4-D alone applied; and so on. The alfalfa seeds were applied to the A pots at once; to the B pots a week later; to the C pots, two weeks later; and to the final group of D pots, three weeks later.

Throughout the duration of the experiment, the alfalfa seeds in the control pots (a) and those treated with melamine alone (d) germinated 100% and continued to grow healthy viable plants. In the (A) pots, those pots treated with 2,4-D alone or 2,4-D/melamine granules showed 100% mortality or aborted germination. In the (B) pots, one week after the herbicide application the 2,4-D/melamine granules caused 100% mortality of the alfalfa seed; the 2,4-D alone had lost most of its effectiveness, and there was 80% successful germination. In the (C) pots, after two weeks the 2,4-D alone was ineffective and there was 90% seed germination and growth; the 2,4-D/melamine granule treatment was producing a weaker effect, and 30% of the seeds as treated germinated successfully. In the (D) pots, after three weeks the seeds treated with 2,4-D alone were germinating as well as the controls, and the 2,4-D in the 2,4-D/melamine granules was almost exhausted, with 90% germination.

These percentages of seed germination are set forth in Table II below:

## TABLE II

| Soil Treatment | Extent of Germination | | | |
| --- | --- | --- | --- | --- |
| Applied at 0 Days | (A) Pots Planted; 0 Days | (B) Pots Planted; 7 Days Later | (C) Pots Planted; 14 Days Later | (D) Pots Planted; 21 Days Later |
| (a) None | 100 | 100 | 100 | 100 |
| (b) 2,4-D | 0 | 80 | 90 | 100 |
| (c) 2,4-D/ melamine granules | 0 | 0 | 30 | 90 |
| (d) Melamine granules | 100 | 100 | 100 | 100 |

## EXAMPLE 4

Pot Tests Using Example 2 Granules - Alfalfa Seeds

A second series of experiments was run following the test protocol of Example 3 above, with the exception that the granular product prepared in Example 2 above was substituted for the granular product of Example 1.

A series of three pot treatments was set up as follows:

(a) control pots to which no chemical was applied;

(b) 2,4-D alone (applied at a rate equivalent to 22.7 kg/ha ); and

(c) 2,4-D/melamine/urea granules of Example 2 (applied at a rate equivalent to 22.7 kg of 2,4-D/ ha ).

In each case, the 2,4-D or the granules were applied to the surface of the soil in the pot. All pots were treated at the same time, at the beginning of the test period.

For each treatment, replicates of three pots were set up in four groups (A)-(D) so that alfalfa seeds could be planted on the surface of undisturbed soil at the beginning of the test and at the beginning of each of the three following weeks, generally as in Example 3 above.

The percentages of seed germination for the four groups of pots are set forth in Table III below:

## TABLE III

| Soil Treatment | Extent of Germination | | | |
|---|---|---|---|---|
| | | (B) Pots | (C) Pots | (D) Pots |
| | (A) Pots | Planted; | Planted; | Planted; |
| Applied at | Planted; | 7 Days | 14 Days | 21 Days |
| 0 Days | 0 Days | Later | Later | Later |
| (a) None | 100 | 100 | 100 | 100 |
| (b) 2,4-D | 0 | 31 | 49 | 82 |
| (c) 2,4-D/ urea/ melamine granules | 0 | 13 | 14 | 20 |

Example 5

The Effects of Using Various Herbicide/Melamine Combinations as a Slow Release Herbicide on the Growth of Potted 2-0 Douglas-Fir Seedlings

In this demonstration of the invention, not only the efficiencies and effective lives of the formulated herbicides were studied, but also their respective overall effects on the fir seedlings.

The following granular herbicide formulations were used:

(a) 2,4-D 5%, melamine 71%, urea 24%

(b) 2,4-D 4.7%, melamine 88.1%, resin solids 7.2%

(c) 2,4-D/KL (a controlled release formulation of 2,4-D with kraft lignin 10%, melamine 72%, urea 18%

(d) Velpar® herbicide 5.35%, melamine 90.35%, resin solids 4.3% (V/MI)

(e) b and d, applied together

(f) control, no treatment

(g) technical 2,4-D treatment

Velpar® herbicide is a du Pont product believed to contain about 90% by weight of hexazinone (3-cyclohexyl-6-(dimethylamino)-1-methyl-1,3,5-triazine-2,4(1H,3H)-dione) plus inert ingredients. It is usually applied as a spray. It is believed that moisture is required to activate it in the soil.

Douglas-fir seedlings (2.0) were planted in 10" (25 cm) diameter pots. Each of the above five granule treatments was applied to three potted firs. Two control sets of potted seedlings had respectively no treatment, and an application of commercial 2,4-D, for comparison. In the application of the commercial 2,4-D, the fine powdered material was applied evenly to the soil surface, using the same 2,4-D material employed in making the granular formulations.

The 2,4-D was applied in all sets at the equivalent rate of 22.7 kg ai/ha and the Velpar® herbicide at 23.8 kg ai/ha (ai = active ingredient).

These sets were monitored for seedling height growth, growth quality of the seedling, and weed growth surrounding the seedling, represented as a % of soil surface.

There were no visible weeds present on the soil at the time of treatment. However, volunteer weed seeds were always present in the atmosphere and daily settled on the soil surface.

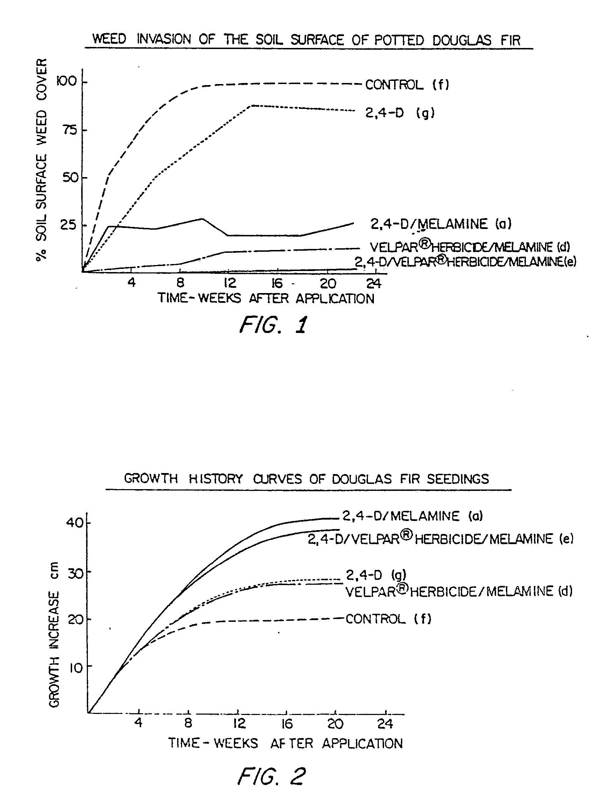

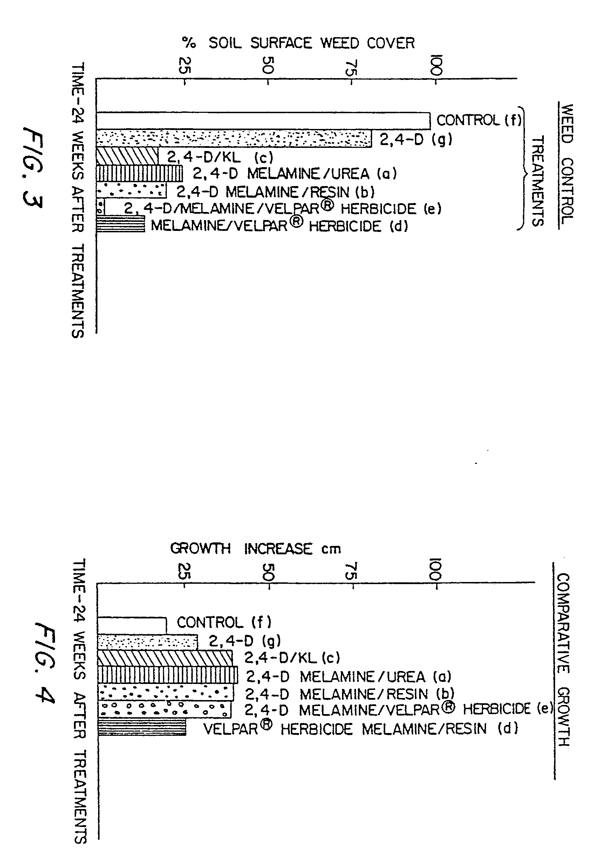

In the drawings, Figs. 1 and 3 compare the weed growth observed following soil treatment, using the pot-planted Douglas fir seedlings. The letters in parenthesis adjacent each curve in Fig. 1 and bar in Fig. 3 refer to the respective treatments listed above. The data for treatments (a) and (b) were so similar that only the data for the (a) treatment, i.e. the urea-bound granules, were plotted in Figs. 1 and 2. Figs. 2 and 4 are similar sets of curves and bars respectively, comparing the growth histories of the seedlings after the respective treatments.

The control plantings with no treatment, Fig. 1, curve (f), show how quickly the volunteer weed seeds settle and establish. In a little over eight weeks the weed population had completely and competitively established 100% of the soil surface, surrounding and overtowering the seedlings. The corresponding mean height growth of the Douglas-fir seedlings in the control pots, Fig. 2, curve (f), was only 20 cm. All the other treatments exhibited better mean height growth.

The technical 2,4-D application initially gave good weed control, Fig. 1, curve (g). But as the effectiveness of the short-lived 2,4-D subsided, the weeds invaded. By fourteen weeks the weed population occupied almost 90% of the soil surface, Fig. 1 curve (g). However this early period free of competitive weeds, plus also some growth stimulant effect from the auxin-like 2,4-D, produced an increased mean height growth of 28 cm., Fig. 2, curve (f), and Fig. 4, bar (f). This is a 40% improvement in height growth in comparison with the non-treatment set, Fig. 4, bar (f).

All three 2,4-D melamine granule preparations, (a), (b), and (c), gave overall, long lasting, good weed control, Figs. 1 and 3, lasting up to 24 weeks. The corresponding growth of the Douglas-fir seedlings was excellent; there was a second bud flush and steady growth. Their mean growth was, as shown in Fig. 4:

(a) 41 cm., 105% greater than the control;

(b) 39 cm., 95% greater than the control; and

(c) 37 cm., 85% greater than the control.

This growth resulted from much reduced weed competition throughout the growing season and also the constant minute supply of growth stimulator from the 2,4-D to the deep rooted fir seedlings.

The pots treated with Velpar® herbicide/melamine, with a resin binder, exhibited excellent long term weed control with growth benefits to the seedlings. Mean height growth was 26 cm., which is 30% better than the nontreated control (Fig. 4). In these pots the benefits of slow release herbicide are manifested but no secondary growth stimulus effect is apparent on the tree seedlings.

The pots treated (e) with both 2,4-D/M granules (b) and Velpar® herbicide granules (d) exhibited the best overall weed control, Figs. 1 and 3, and the growth of seedlings was correspondingly excellent. The mean height growth was 37 cm., Fig. 4, which is 85% better than a 2,4-D granule alone (g). Therefore, the ever greater weed control gained from this combination did not provide any more growing advantage to the seedling.

From these results, it is concluded that with the herbicide-melamine prills, over twenty-four weeks of weed control can be obtained, which is six times longer than the 2,4-D technical application. At the same time the resulting growth of the seedlings is much improved.

Example 6

Granular Formulations

Several granule formulations were prepared and tested, using melamine particles, powdered urea, and a BAM, in the form of a finely divided powder. The granules were prepared by mixing the dry ingredients, tumbling, spraying to moisten the urea and make it tacky, and drying. Representative formulations included the following, where all parts and percentages are by weight, dry basis, unless otherwise indicated.

A. Herbicide Formulations - Urea Binder

| 6A1 | Melamine | 78 g |
| | Urea | 20 g |
| | 2,4-dichlorophenoxybutyric acid (2,4-DB) | 2 g |

| 6A2 | Melamine | 78 g |
| | Urea | 20 g |
| | Treflan | 2 g |
| | brand of trifluralin ($\alpha,\alpha,\alpha$-trifluoro-2,6-dinitro-N,N-dipropyl-p-toluidine) | |

| 6A3 | Melamine | 78 g |
| | Urea | 20 g |
| | Dicamba | 2 g |
| | (3,6-dichloro-o-anisic acid) | |

| 6A4 | Melamine | 63.3 pts. |
| | Urea | 31.6 pts. |
| | Cotoran | 4 pts. (as received) |
| | brand of fluometuron (1,1-dimethyl-3-($\alpha,\alpha,\alpha$-trifluoro-m-tolyl)urea) (80 wt. %) | |

| 6A5 | Melamine | 63.3 pts. |
| | Urea | 31.6 pts. |
| | Dacthal | 20 pts. (as received) |
| | brand of DCPA (dimethyl tetrachloroterephthalate) (75 wt. %) | |

| 6A6 | Melamine | 63.3 pts. |
| | Urea | 31.6 pts. |
| | Lorox | 5 pts. (as received) |
| | brand of Linuron (3-(3,4-dichlorophenyl)-1-methoxy-1-methylurea); or, (N'-(3,4-dichlorophenyl)-N-methoxy-N-methylurea)) (50 wt. %) | |

| 6A7 | Melamine | 63.3 pts. |
| | Urea | 31.6 pts. |
| | Prowl | 5.1 pts. (as received) |
| | brand of N-(1-ethylpropyl)-2,6-dinitro-3,4-xylidine) (about 1.68 pts. active ingredient) | |

| 6A8 | Melamine | 63.3 pts. |
| | Urea | 31.6 pts. |
| | Basalin | 5.1 pts. (as received) |
| | brand of N-(2-chloroethyl)-$\alpha,\alpha,\alpha$-trifluoro-2,6-dinitro-N-propyl-p toluidine (0.48 g/cm$^3$) (about 2.44 pts. active ingredient) | |

| 6A9 | Melamine | 64 pts. |
| | Urea | 32 pts. |
| | Ronstar | 8 pts. (as received) |
| | brand of oxadiazon (2-tert-butyl-4-(2,4-dichloro-5-isopropoxyphenyl)-$\Delta^2$-1,3,4-oxadiazolin-5-one) | |

| 6A10 Melamine | 64 pts. |
| Urea | 32 pts. |
| Dual | 4 pts. (as received) |

brand of metolachlor (2-chloro-6'-ethyl-N-(2-methoxy-1-methylethyl)acet-o-toluidide)

| 6A11 Melamine | 63.3 pts. |
| Urea | 31.6 pts. |
| Aatrex | 5 pts. (as received |

brand of atrazine(2-chloro-4(ethylamino)-6-(isopropyl-amino)-s-triazine)
(80 wt. %)

| 6A12 Melamine | 63.3 pts. |
| Urea | 31.6 pts. |
| Bladex | 5 pts. (as received) |

brand of cyanazine (2-[[4-chloro-6-(ethylamino)-s-triazin-2-yl]amino]-2-methylpropionitrile)
(80 wt. %)

| 6A13 Melamine | 63.3 pts. |
| Urea | 31.6 pts. |
| Propham | 6 pts. |
| (isopropyl carbanilate) | |

## B. Herbicide Formulations - Resin Binder

Granules were prepared from the following formulations using a resin binder. The binder in each case was UCAR 368 polyvinyl acetate latex. It was reduced to 25% solids, then sprayed on a tumbling mixture of melamine and herbicide particles, generally following the procedure of Example 1. The dried binder is essentially water-insoluble. The latex was applied so that in the product granules, the binder constituted about 5% of the solids, dry basis, by weight, unless otherwise indicated.

| 6B1 Melamine+ | 90% |
| Binder | |
| 2,4-DB herbicide | 10% |

| 6B2 Melamine+ | 90% |
| Binder | |
| Treflan herbicide | 10% |

| | | |
|---|---|---|
| 6B3 | Melamine+ | 90% |
| | Binder | |
| | Dicamba herbicide | 10% |
| 6B4 | Melamine+ | |
| | Binder | 89% |
| | Dicamba herbicide + | |
| | 2,4-D (equal parts by weight) | 10% |
| 6B5 | Melamine+ | 94.9 pts. |
| | Binder | |
| | Prowl herbicide | 5.1 pts. |
| 6B6 | Melamine+ | 94.9 pts. |
| | Binder | |
| | Basalin herbicide | 5.1 pts. |
| 6B7 | Melamine+ | 96 pts. |
| | Binder | |
| | Ronstar herbicide | 8 pts. |
| 6B8 | Melamine+ | 96 pts. |
| | Binder | |
| | Dual herbicide | 4 pts. |
| 6B9 | Melamine | 80 pts. |
| | Binder | 10 pts. |
| | Tandex | 10 pts. (as received) |
| | brand of karbutilate (tert-butylcarbamic acid ester with 3-(m-hydroxyphenyl)-1,1-dimethylurea) (80 wt. %) | |
| 6B10 | Melamine+ | 87.5% |
| | Binder | |
| | Bladex herbicide | 12.5% |
| 6B11 | Melamine+ | 87.5% |
| | Binder | |
| | Aatrex herbicide | 12.5% |
| 6B12 | Melamine | 87.5% |
| | Binder | |
| | Tandex herbicide | 12.5% |

C. Growth Retardant Formulations - Urea Binder

These granules were prepared in the same manner as those in Example 6A.

| | | |
|---|---|---|
| 6C1 | Melamine | 63.3 pts. |
| | Urea | 31.6 pts. |
| | Maleic Hydrazide | 6 pts. |

|     | 6C2 | Melamine | 63.3 pts. |
|-----|-----|----------|-----------|
|     |     | Urea     | 31.6 pts. |
|     |     | Alar     | 6 pts.    |
|     |     | brand of daminozide(N-dimethyl-succinamic acid) | |

## D. Growth Stimulant Formulations

These granules were prepared in the same manner as other granules in this example, using urea and resin binders respectively.

|     | 6D1 | Melamine | 78 g. |
|-----|-----|----------|-------|
|     |     | Urea     | 20 g. |
|     |     | NAA      | 2 g.  |
|     | 6D2 | Melamine | 90%   |
|     |     | Binder   |       |
|     |     | NAA      | 10%   |

NAA refers to naphthalene acetic acid, a growth stimulant that is also effective in controlling apple drop.

## E. Evaluations

For surface application to the soil in areas of little rainfall, granules having a urea binder are quite useful. For high moisture situations, granules made with a poorly soluble resin binder provide generally good persistence of activity. Increasing the amount of the resin tends to decrease the rate of release of the BAM and prolong the period of persistence.

## Example 7

### Rate of Release Studies from Granular Formulations

Several additional granules were prepared for use in a comparative evaluation with technical Velpar® herbicide and with technical 2,4-D herbicide. The granules were prepared by methods already described, to have the following formulations, on a dry weight basis:

|     | 7A | Melamine | 90.35% |
|-----|----|----------|--------|
|     |    | Velpar® Herbicide | 5.35% |
|     |    | Resin    | 4.30%  |
|     | 7B | Melamine | 76%    |
|     |    | Velpar® Herbicide | 5% |
|     |    | Urea powder | 12% |
|     |    | Urea via spray | 7% |
|     | 7C | Melamine | 33.1%  |
|     |    | 2,4-D    | 4.7%   |
|     |    | Resin    | 7.2%   |
|     | 7D | Melamine | 71%    |
|     |    | 2,4-D    | 5%     |
|     |    | Urea     | 24%    |

Each of these formulations was made up into granules that were screened to fall within the size range of 0.84 to 1.41 mm.

In order to make measurements on the amount of herbicide released from each set of granules, a sample was taken of each. The sample was placed in dialysis tubing. The tubing was submerged in a covered container of distilled water containing 10 liters of water at 22° C. The solution was agitated and 10 ml. aliquots were removed at appropriate times.

The aliquots were subjected to analyses by an ultra-violet spectrophotometer at 203, 247 and 284 nm. respectively, for determination of the contents of melamine and herbicide.

Under these test conditions, technical Velpar® herbicide was essentially completely released into the bath in a little more than one day. With the resin-bound granules of Example 7A, the Velpar® herbicide had a half-life of about three days, but thereafter the herbicide was released at an increasingly slow rate, with more than 10% remaining in the granule after two weeks, and with release continuing but at a reduced rate, the granules still containing about 2% or 3% of the original herbicide after more than 30 days. With the urea-bound granules of Example 7B, essentially 100% of the herbicide was released after three days.

As to the melamine in the granules, about half of the melamine entered the water bath from the Example 7A granules after six days; about 80% had entered the water bath after about 12 days; and about 92% of the melamine had entered the water bath after about 22 days. With the urea-bound granules of Example 7B, essentially 100% of the melamine had entered the water bath after one week.

With technical 2,4-D, 100% of this herbicide had entered the bath after 8-9 days. With the resin-bound granules of Example 7C, the half-life of the 2,4-D was about four days; about 80% of the herbicide had entered the bath after about 20 days; and the herbicide leached out very slowly after that. With the granules bound by urea from Example 7D, the half-life of the herbicide was about the same as for the technical 2,4-D; that is, after two days of almost 50% of the herbicide from the granule appeared in the bath. After that time, however, the rate of release into the bath slowed down, so that about 10% of the herbicide remained within the dialysis tubing after about nine days. Only after about 14 days was essentially 100% of the herbicide released into the bath.

The rate of transfer of melamine into the bath from the granules of Examples 7C and 7D, corresponded fairly closely to the rate of transfer of the herbicide itself. Thus, with the resin-bound granules of Example 7C, 90% of the melamine appeared in the bath after about 21 days, but thereafter, the rate of release was extremely slow, so that after 30 days, about 7.5% of the melamine remained to be released into the bath. With the urea-bound granules of Example 7D, essentially 100% of the melamine appeared in the bath after about 12 days.

Because it was observed that the effective life of the Velpar® herbicide under laboratory conditions was over nine weeks, field trials were made to subject the herbicide and the granules to all of the natural degrading elements, such as rain, temperature fluxuations, soil fauna, and the like. Under field conditions, there was a constant supply of different kinds of volunteer weed seeds continuously invading the trial areas. This enhanced the value of the observations made.

Four test plots were established with buffer areas between the plots, as a precaution against any treatment contamination. The test plots were subjected to treatments as follows:

1. Sprayed with a solution of Velpar® herbicide made up in accordance with package directions, at the rate of 2.3 kg of the active ingredient per ha.
2. This control plot received no treatment at all.
3. The third control plot had Example 7A granules applied to the surface of the soil at a rate sufficient to apply 2.3 kg of the active ingredient of the Velpar® herbicide per ha.
4. The fourth plot was treated with Example 7B granules at a rate sufficient to apply 2.3 kg of the active ingredient of the Velpar® herbicide per ha.

Following these treatments, mixed grass seeds were planted in 10 cm. bands across the test plots at regular intervals of time. The plots were then observed so that germination was monitored not only of the mixed grass seeds but also of any volunteer wheat seeds. The observations were recorded.

The urea-bound granules of Example 7B had disintegrated after three days. The resin-bound granules of Example 7A maintained their physical forms for over 12 weeks, although diminishing somewhat in size.

For the first eight weeks, the test plots treated with the spray of Velpar® herbicide and with both types of granules remained free from growing grass. The seed germinated but then died back, so that control of the growth of the seeds was 100% effective. On the test plot used as the control, to which no treatment was applied, the applied grass seeds germinated and grew.

After about eight weeks, some volunteer weeds appeared in the test plot that had been sprayed with Velpar® herbicide spray. Similar weeds were also appearing in the test plot used as the control, and these weeds were establishing. After about 12 weeks, a very small percentage of the introduced grass seeds survived in the test plot that had been sprayed with Velpar®. After 18 weeks, grass was germinating in this particular test plot (the one sprayed with the Velpar® herbicide spray, and was germinating and growing as well as it did in the control plot. In contrast, nothing was growing in the two test plots to which the granules had been applied.

After 25 weeks, some grass seeds survived in the test plots to which the two types of granules had been applied. At this point in time, the grass appeared to have reached the same stage as it had after 12 weeks in the test plot that had been sprayed with the Velpar® herbicide spray. At this point the trials were discontinued because of weather problems. Therefore, the actual effective lives of the herbicides applied in the granular form was not determined in this particular field trial. However, both types of granules produced 13 weeks of control over and above that obtained by the normal spray application of the Velpar® herbicide, thus doubling the effective life of this herbicide.

Preparation Example

Australian Patent 534 003 describes several techniques for the production of fertilizer granules based on the use of melamine or its salts, which must be characterized by fine particle sizes not above about 2 mm and by poor solubility in pH 7 water at 20°C, and preferably by a maximum particle size of 400 micrometers or less. All of the several granule producing techniques described in Australian Patent 534 003 may be employed in the production of BAM-containing granules in accordance with the present invention.

For example, following the procedure described in Example 1 hereof, 2,4-D-containing granules have been produced where the binder was, instead of polyvinyl acetate latex, calcium lignin sulfonate and, separately, melamine-formaldehyde resin, each applied as a binder at 30% to 50% solids. The rate of application in each case was such that the dried granules contained about 5% binder solids by weight. Similarly, urea-formaldehyde may be used as a binder with good effect.

In one form of granule, a powder mixture is made of melamine, urea, and 2,4-D. Other BAMs may be used in place of the 2,4-D. The powder mixture is then placed in a pan agglomerator or other suitable piece of equipment, and sprayed with a solution of urea in water, and the tacky mixture is agglomerated. The agglomerates are then dried in a low temperature oven drier of the kind described above in Example 1. Such dried granules typically have crush strengths of about 450 grams or more.

More preferably, the crush strength is improved by subjecting the dried granules to an annealing process of the kind described in US Patent 4 421 542. In this annealing process, the dried granules are heated in an oven environment at a temperature above the melting point of urea, which is 132°C. The granules are held in this elevated temperature environment for a period of time which is sufficiently short that the granules retain their shapes. If the oven temperature is in the range from about 135°C (275°F) to about 150°C, then a retention time of from 8 to about 15 minutes is typical. This permits the urea either to approach the molten state or to become tacky. At least some of the solid particles in the granule are wetted by the urea. The granules are then cooled in air to ambient temperature, and the cooled urea forms a hard binder which leads to granules of much improved crush strength. Typically the crush strength of granules produced in this way will be about 1350 grams or more.

Crush strengths are determined by randomly selecting 10 granules of 3 mm. to 4 mm. diameter from a given batch of granules. The selected 10 granules are then subjected to pressure, which is monitored until crushing occurs. The 10 values observed for crushing failure are then averaged, and the average value is that reported as crush strength.

When the binder is water soluble, rain may dissolve it, releasing the melamine or other nitrogen source particles and the BAM rapidly. When the binder is water-insoluble, the binder structure remains substantially intact despite exposure to moisture; what happens over a period of time is that the other components in the granule are dissolved, and the rate of release of both the melamine, or other similar material, and the BAM, is very slow.

When the granules are spherical in shape, soil moisture or rainfall will gradually reduce the granules in size. This means that the surface area is constantly decreasing, so that the exposure of the BAM at the granule surface decreases over a period of time. To provide a material offering a substantially constant surface area, and consequently a substantially uniform rate of exposure of the BAM, a flake form is desirable. One way of making such a flake form or product is to mix together melamine, urea, and the BAM, all in powder form, in the desired proportions. This blend is then heated until a molten slurry is obtained. The slurry is then formed into a slab which, upon cooling and hardening, can readily be broken or shaved into flake form. For a small batch, the slurry may be poured onto a flat cooling surface. For continuous production, the slurry may be transferred to a moving metal belt at a regulated thickness and cooled to form a continuous ribbon of uniform thickness.

When such a slab or ribbon is made from a blend of melamine and urea powders, with the BAM mixed in, and heated until the urea becomes molten, flakes formed from the cooled slab or ribbon have exceptionally high crush strength. Similar results may be obtained when a blend of melamine, urea, and the BAM is heated in a hot platen press under pressure for a few minutes and then cooled. Flakes formed from the cooled sheet have similarly high crush strength. If desired, the flakes may be screened, with recycling of fines and crushing of oversize, to produce flakes in a uniform size range.

When applied to the surface of the soil, urea volatilizes, especially if the soil is damp. When melamine-urea granular agglomerates are applied to the surface of the soil, volatilization appears to be eliminated or so substantially reduced as to be of little practical importance. This phenomenon is important and valuable, since slow breakdown of the granular structure affects the rate of release of any BAM in the granules.

The present granular form of BAM provides a prolonged release and activity for the BAM. This feature is important for herbicides applied to barley, mint, sorghum, cotton, grass, and other crops.

The fertilizer benefits of a melamine-urea granule are obtained from surface application, but turning the granules under into the root zone, i.e. down to about 35 cm is preferred for fertilizer considerations alone. The urea binder releases discrete particles of the BAM and of the melamine from the granule into the soil. The released particles are subjected to the action of moisture and microorganisms. Sub-surface application is also useful for the application of systemic insecticides or the like, and for some herbicides.

One very promising application of this invention relates to the use of metribuzin for soybeans. As ordinarily used, this herbicide often damages the crop. The use of resin-bound melamine granules may avoid this problem because of the slow release rate. Another promising application relates to the use of granules of the invention containing Dursban brand of insecticide to lawns, for the control of cinch bugs and other insects. Dursban brand of insecticide is believed to contain, as its active material, O,O-diethyl-O-(3,5,6-trichloro-2-pyridinyl) esters of phosphorothioic acid.

When the poorly soluble, particulate nitrogen source is melamine or its salts, and the granules are agglomerates made up with a water-soluble binder, the preferred proportions are from 60% to 85% melamine, from 15% to 40% of the soluble binder such as urea, and up to 10% of a BAM. When the granules are prills, or flakes, or have been made by hot pressing a fusible, water-soluble binder mixed with other material, with a binder material such as urea, the proportions may be from 10% to about 67% melamine, from 33% to 90% binder, and again, up to about 10% of the BAM. Thus, overall, the proportions may be from 10% to 85% melamine, from 15% to 90% of the urea binder, and up to 10% of the BAM.

Where a water-insoluble resin binder is employed, the melamine generally may be from 10% to 99%, the BAM up to 10% but generally 7.5% or less, and the resin binder is generally 1% to 10%, preferably 2% to 10%, more preferably 4% to 6%. When particulate materials other than melamine are used, similar proportions should be used. Preferably all solid particles are smaller than about 400 $\mu$m.

## Claims

1.  A solid composition for use as a source of a biologically active material exhibiting prolonged activity following application of said composition to the soil, said composition comprising
    (i) an admixture of:
    (a) a biologically active material, and
    (b) a particulate source of fertilizer nitrogen that is characterized by a particle size of 2 mm or less and by poor solubility in pH 7 water at 20° C not in excess of 5 grams per 100 grams of water, or less, and that is selected from the group consisting of melamine, benzoguanamine, dicyandiamide, ammeline, ammelide, cyanuric acid, mixtures thereof, their physiologically acceptable inorganic and organic salts, and mixtures thereof, and
    (ii) a binder that holds the said mixture in solid form;
    said solid composition being applicable to the soil and said solid form serving thereafter to protect said biologically active material from the degradative effects of sunlight and oxygen, the leaching effect of water, and the volatilization effects of wind and sun.

2.  The solid composition of claim 1 wherein said composition comprises an amount up to about 30% by weight of said biologically active substance and from about 10% to about 95% by weight of said particulate nitrogen source.

3.  The solid composition of claim 2 wherein said composition comprises an amount up to about 7.5% by weight of said biologically active material, from about 40% to about 95% by weight of said particulate nitrogen source, and from about 4% to about 60% by weight of said binder.

4. The composition of claim 3 wherein the binder is urea, in an amount from 20% to 60% by weight of the composition.

5. The composition of claim 3 wherein the binder is a salt dried from a solution and selected from the group consisting of ammonium sulfate, potassium sulfate, ammonium nitrate, ammonium phosphate, potassium nitrate, potassium chloride, ammonium chloride, and potassium dihydrogen phosphate.

6. The composition of claim 2 wherein said binder is a natural or synthetic polymer.

7. The composition of claim 2 wherein the binder is selected from the group consisting of a lignin derivative, a urea-formaldehyde resin, an aminoplast resin, and a polyethenoid composition in latex form.

8. The composition of claim 3 wherein said nitrogen sources are salts selected from the group consisting of the metaphosphate, nitrate, orthophosphate, orthophosphate dihydrate, polyphosphate, potassium dihydrogen phosphate, bisulfate, and sulfite salts, and mixtures thereof.

9. The composition of claim 3 wherein the salts of said nitrogen source are selected from the group consisting of the formate, cyanurate, and chloroacetate salts, and mixtures thereof.

10. The solid composition of claim 3 wherein said particulate nitrogen source consists of particles of melamine in an amount from 40% to 80% by weight of said composition, having a particle size predominantly less than 400 micrometers, and said binder is urea in an amount from 20% to 60% by weight of said composition.

11. A composition in the form of granules having sizes in the range from 1 mm. to 10 mm. and having strength and weight suitable for mechanical dispensing for application to the soil, that exhibit prolonged activity for use as a source of a biologically active material following application of said granular composition to the soil, said composition comprising
    (i) an admixture of:
        (a) a biologically active material having herbicidal properties, and
        (b) particulate melamine having particle sizes predominantly less than about 400 micrometers, and
    (ii) a urea binder that holds said biologically active material and the melamine particles in granular form;
        said composition comprising from about 1% to about 7.5% by weight thereof of said biologically active material, from about 10% to about 85% by weight thereof of said particulate melamine, and from about 15% to about 90% by weight of said urea binder;
        said granular composition protecting said biologically active material from the degradative effects of sunlight and oxygen, the leaching effect of water, and the volatilization effects of wind and sun, while permitting the release of the biologically active material slowly so as to extend the time period during which it is capable of exerting herbicidal effect over a substantially longer period than if it were applied directly to the soil, alone.

12. The granular agglomerated composition of claim 11 wherein the amount of melamine is from 60% to 85% by weight of the composition and the amount of urea binder is from 15% to 40% by weight of the composition.

13. The granular composition of claim 11 in the form of granules hardened from a heat-softened mass, wherein the amount of melamine is from 10% to 67% by weight of the composition and the amount of urea binder is from 33% to 90% of the composition.

14. A composition in the form of granules having sizes in the range from 1 mm. to 10 mm. and having strength and weight suitable for mechanical dispensing for application to the soil, for use as a source of a biologically active material following application of said granular composition to the soil, said composition comprising
    (i) an admixture of:
        (a) a biologically active material in an amount up to 7.5% by weight of said granular composition, and

(b) particulate melamine having a particle size predominantly less than 400 micrometers, said melamine being present in an amount in the range from about 10% to 99% by weight of the granular composition, and

(ii) a resin binder in an amount from 1% to 10% of the composition by weight, that holds said mixture in granular form;

the granular composition protecting said biologically active material from the degradative effects of sunlight and oxygen, the leaching effect of water and the volatilization effects of wind and sun, while permitting the release of the biologically active material slowly so as to extend the time period during which it is effective over a substantially longer period of time than would be the case if it were applied directly to the soil, alone.

15. The composition of one of claims 1 to 14 in which the biologically active material is the herbicidal material 2,4-dichlorophenoxyacetic acid or the herbicidal material hexazinone.

## Revendications

1. Une composition solide à utiliser comme source d'une substance biologiquement active manifestant une activité prolongée après l'application de ladite composition au sol, ladite composition comprenant

(i) un mélange de :

(a) une substance biologiquement active, et

(b) une source particulaire d'azote fertilisant qui est caractérisée par une dimension granulométrique de 2 mm ou moins et par une faible solubilité dans l'eau à pH 7 à 20°C, ne dépassant pas 5 grammes pour 100 grammes d'eau, ou moins, et qui est choisie dans le groupe formé par la mélamine, la benzoguanamine, le dicyandiamide, l'amméline, l'ammélide, l'acide cyanurique et leurs mélanges, leurs sels minéraux et organiques physiologiquement acceptables, et leurs mélanges, et

(ii) un liant qui maintient ledit mélange sous forme solide ;

ladite composition solide étant applicable au sol et ladite forme solide servant à protéger par la suite ladite substance biologiquement active contre les effets de dégradation par la lumière solaire et l'oxygène, l'effet de lessivage par l'eau et les effets de volatilisation par le vent et le soleil.

2. La composition solide de la revendication 1, dans laquelle ladite composition comprend une quantité d'au plus environ 30 % en poids de ladite substance biologiquement active et environ 10 % à environ 95 % en poids de ladite source d'azote particulaire.

3. La composition solide de la revendication 2, dans laquelle ladite composition comprend une quantité d'au plus environ 7,5 % en poids de ladite substance biologiquement active, environ 40 % à environ 95 % en poids de ladite source d'azote particulaire et environ 4 % à environ 60 % en poids dudit liant.

4. La composition de la revendication 3, dans laquelle le liant est l'urée en une quantité de 20 % à 60 % en poids de la composition.

5. La composition de la revendication 3, dans laquelle le liant est un sel séché à partir d'une solution et choisi dans le groupe formé par le sulfate d'ammonium, le sulfate de potassium, le nitrate d'ammonium, le phosphate d'ammonium, le nitrate de potassium, le chlorure de potassium, le chlorure d'ammonium et le dihydrogénophosphate de potassium.

6. La composition de la revendication 2, dans laquelle ledit liant est un polymère naturel ou synthétique.

7. La composition de la revendication 2, dans laquelle le liant est choisi dans le groupe formé par un dérivé de lignine, une résine urée-formaldéhyde, une résine aminoplaste et une composition de polyéthénoïde sous forme de latex.

8. La composition de la revendication 3, dans laquelle lesdites sources d'azote sont des sels choisis dans le groupe formé par les sels des types métaphosphate, nitrate, orthophosphate, orthophosphate dihydraté, polyphosphate, dihydrogénophosphate potassique, bisulfate et sulfite, et leurs mélanges.

9. La composition de la revendication 3, dans laquelle les sels de ladite source d'azote sont choisis dans le groupe formé par les sels des types formiate, cyanurate et chloracétate, et leurs mélanges.

10. La composition solide de la revendication 3, dans laquelle ladite source d'azote particulaire consiste en des particules de mélamine en une quantité de 40 % à 80 % en poids de ladite composition, ayant une dimension granulométrique principalement inférieure à 400 micromètres, et ledit liant est l'urée en une quantité de 20 % à 60 % en poids de ladite composition.

11. Une composition sous la forme de granulés ayant des grosseurs comprises dans l'intervalle de 1 mm à 10 mm et ayant une résistance et un poids convenant à une distribution mécanique pour l'application au sol, qui manifeste une activité prolongée, à utiliser comme source d'une substance biologiquement active après l'application de ladite composition granulaire au sol, ladite composition comprenant
    (i) un mélange de :
        (a) une substance biologiquement active possédant des propriétés herbicides, et
        (b) des particules de mélamine ayant des dimensions granulométriques principalement inférieures à 400 micromètres environ, et
    (ii) un liant constitué d'urée qui maintient ladite substance biologiquement active et les particules de mélamine sous forme granulaire ;
        ladite composition comprenant ladite substance biologiquement active en une quantité d'environ 1 % à environ 7,5 % de son poids, lesdites particules de mélamine en une quantité d'environ 10 % à environ 85 % de son poids et ledit liant constitué d'urée en une quantité d'environ 15 % à environ 90 % en poids ;
        ladite composition granulaire protégeant ladite substance biologiquement active contre les effets de dégradation par la lumière solaire et l'oxygène, l'effet de lessivage par l'eau et les effets de volatilisation par le vent et le soleil, tout en permettant la libération lente de la substance biologiquement active de manière à prolonger la durée pendant laquelle celle-ci est capable exercer un effet herbicide sur une période sensiblement plus longue que si elle était appliquée seule directement au sol.

12. La composition granulaire agglomérée de la revendication 11, dans laquelle la quantité de mélamine est de 60 % à 85 % en poids de la composition et la quantité de liant constitué d'urée est de 15 % à 40 % en poids de la composition.

13. La composition granulaire de la revendication 11 sous la forme de granulés durcis à partir d'une masse ramollie à chaud, dans laquelle la quantité de mélamine est de 10 % à 67 % en poids de la composition et la quantité de liant constitué d'urée est de 33 % à 90 % de la composition.

14. Une composition sous la forme de granulés ayant des grosseurs comprises dans l'intervalle de 1 mm à 10 mm et ayant une résistance et un poids convenant à la distribution mécanique pour l'application au sol, à utiliser comme source d'une substance biologiquement active après l'application de ladite composition granulaire au sol, ladite composition comprenant
    (i) un mélange de :
        (a) une substance biologiquement active en une quantité d'au plus 7,5 % en poids de ladite composition granulaire, et
        (b) des particules de mélamine ayant une dimension granulométrique principalement inférieure à 400 micromètres, ladite mélamine étant présente en une quantité comprise dans l'intervalle d'environ 10 % à 99 % en poids de la composition granulaire, et
    (ii) un liant résineux en une quantité de 1 % à 10 % en poids de la composition, qui maintient ledit mélange sous forme granulaire ;
        la composition granulaire protégeant ladite substance biologiquement active contre les effets de dégradation par la lumière solaire et l'oxygène, l'effet de lessivage par l'eau et les effets de volatilisation par le vent et le soleil, tout en permettant la libération lente de la substance biologiquement active de manière à prolonger la durée pendant laquelle celle-ci est efficace sur une période sensiblement plus longue que si elle était appliquée seule directement au sol.

15. La composition de l'une des revendications 1 à 14, dans laquelle la substance biologiquement active est une substance herbicide qui est l'acide 2,4-dichlorophénoxyacétique, ou une substance herbicide qui est l'hexazinone.

EP 0 135 714 B1

**Patentansprüche**

1. Feste Zusammensetzung zur Verwendung als Quelle für ein biologisch aktives Material, die nach dem Aufbringen der Zusammensetzung auf den Boden eine verlängerte Wirksamkeit aufweist, wobei die Zusammensetzung umfaßt
   (i) ein Gemisch aus:
   (a) einem biologisch aktiven Material, und
   (b) einer teilchenförmigen Quelle für Stickstoffdünger, die gekennzeichnet ist durch eine Teilchengröße von 2 mm oder weniger und durch eine schlechte Löslichkeit in Wasser vom pH-Wert 7 bei 20° C von höchstens 5 g pro 100 g Wasser oder weniger, und daß sie ausgewählt ist aus der Gruppe bestehend aus Melamin, Benzoguanamin, Dicyandiamid, Ammelin, Ammelid, Cyanursäure, Gemischen davon, ihren physiologisch verträglichen anorganischen und organischen Salzen, und Gemischen davon, und
   (ii) einem Bindemittel, das das Gemisch in fester Form hält, wobei die feste Zusammensetzung auf den Boden aufgebracht werden kann und die feste Form danach zum Schutz des biologisch aktiven Materials vor den abbauenden Wirkungen von Sonnenlicht und Sauerstoff, der auslaugenden Wirkung von Wasser und den Verflüchtigungswirkungen von Wind und Sonne schützt.

2. Feste Zusammensetzung nach Anspruch 1, wobei die Zusammensetzung eine Menge von bis zu etwa 30 Gew.-% der biologisch aktiven Substanz und von etwa 10 bis etwa 95 Gew.-% der teilchenförmigen Stickstoffquelle umfaßt.

3. Feste Zusammensetzung nach Anspruch 2, wobei die Zusammensetzung eine Menge von bis zu etwa 7,5 Gew.-% des biologisch aktiven Materials, von etwa 40 bis etwa 95 Gew.-% der teilchenförmigen Stickstoffquelle und von etwa 4 bis etwa 60 Gew.-% des Bindemittels umfaßt.

4. Zusammensetzung nach Anspruch 3, wobei das Bindemittel Harnstoff in einer Menge von 20 bis 60 Gew.-% der Zusammensetzung darstellt.

5. Zusammensetzung nach Anspruch 3, wobei das Bindemittel ein aus einer Lösung getrocknetes Salz ist und aus der Gruppe ausgewählt ist, die aus Ammoniumsulfat, Kaliumsulfat, Ammoniumnitrat, Ammoniumphosphat, Kaliumnitrat, Kaliumchlorid, Ammoniumchlorid und Kaliumdihydrogenphosphat besteht.

6. Zusammensetzung nach Anspruch 2, wobei das Bindemittel ein natürliches oder synthetisches Polymer ist.

7. Zusammensetzung nach Anspruch 2, wobei das Bindemittel aus der Gruppe ausgewählt ist, die aus einem Lignin-Derivat, einem Harnstoff-Formaldehydharz, einem Aminoplastharz und einer Polyethenoid-Zusammensetzung in Latexform besteht.

8. Zusammensetzung nach Anspruch 3, wobei die Stickstoffquellen Salze sind, die aus der Gruppe ausgewählt sind, die aus Metaphosphat-, Nitrat-, Orthophosphat-, Orthophosphatdihydrat-, Polyphosphat-, Kaliumdihydrogenphosphat-, Bisulfat- und Sulfitsalzen sowie Gemischen davon besteht.

9. Zusammensetzung nach Anspruch 3, wobei die Salze der Stickstoffquelle aus der Gruppe ausgewählt sind, die aus Formiat-, Cyanurat- und Chloracetatsalzen und Gemischen davon besteht.

10. Feste Zusammensetzung nach Anspruch 3, wobei die teilchenförmige Stickstoffquelle aus Melaminteilchen in einer Menge von 40 bis 80 Gew.-% der Zusammensetzung mit einer überwiegenden Teilchengröße unter 400 Mikrometer besteht und das Bindemittel Harnstoff in einer Menge von 20 bis 60 Gew.-% der Zusammensetzung darstellt.

11. Zusammensetzung in Form von Granulat mit einer Größe im Bereich von 1 bis 10 mm und einer Festigkeit und einem Gewicht, die für die mechanische Abgabe zum Aufbringen auf den Boden geeignet sind, welche verlängerte Wirksamkeit zur Verwendung als Quelle für ein biologisch aktives Material nach dem Aufbringen der Granulat-Zusammensetzung auf den Boden aufweist, wobei die Zusammensetzung umfaßt
    (i) ein Gemisch aus:

32

(a) einem biologisch aktiven Material mit herbiziden Eigenschaften, und

(b) teilchenförmigem Melamin mit einer überwiegenden Teilchengröße unter etwa 400 Mikrometer, und

(ii) ein Harnstoff-Bindemittel, das das biologisch aktive Material und die Melaminteilchen in Granulatform hält, wobei die Zusammensetzung von etwa 1 bis etwa 7,5 Gew.-% davon biologisch aktives Material, von etwa 10 bis etwa 85 Gew.-% davon teilchenförmiges Melamin und von etwa 15 bis etwa 90 Gew.-% Harnstoff-Bindemittel umfaßt;

die Granulat-Zusammensetzung das biologisch aktive Material vor den abbauenden Wirkungen von Sonnenlicht und Sauerstoff, der auslaugenden Wirkung des Wassers und den verflüchtigenden Wirkungen von Wind und Sonne schützt, während es die langsame Freigabe des biologisch aktiven Materials ermöglicht, so daß die Zeitdauer, während der es zur Ausübung einer herbiziden Wirkung in der Lage ist, über einen wesentlich längeren Zeitraum erstreckt wird, als wenn es allein direkt auf den Boden aufgebracht würde.

12. Granulierte Agglomerat-Zusammensetzung nach Anspruch 11, wobei die Melaminmenge von 60 bis 85 Gew.-% der Zusammensetzung und die Menge des Harnstoff-Bindemittels von 15 bis 40 Gew.-% der Zusammensetzung beträgt.

13. Granulat-Zusammensetzung nach Anspruch 11 in Form von aus einer durch Wärme erweichten Masse gehärtetem Granulat, wobei die Menge an Melamin von 10 bis 67 Gew.-% der Zusammensetzung und die Menge an Harnstoff-Bindemittel von 33 bis 90 % der Zusammensetzung beträgt.

14. Zusammensetzung in Form von Granulat mit einer Größe im Bereich von 1 bis 10 mm und einer Festigkeit und einem Gewicht, die für die mechanische Abgabe zum Aufbringen auf den Boden geeignet sind, zur Verwendung als Quelle für ein biologisch aktives Material nach dem Aufbringen der Granulat-Zusammensetzung auf den Boden, wobei die Zusammensetzung umfaßt

(i) ein Gemisch aus:

(a) einem biologisch aktiven Material in einer Menge bis zu 7,5 Gew.-% der Granulat-Zusammensetzung, und

(b) teilchenförmigem Melamin mit einer überwiegenden Teilchengröße unter 400 μm, wobei das Melamin in einer Menge im Bereich von etwa 10 - 99 Gew.-% der Granulat-Zusammensetzung vorliegt, und

(ii) ein Harz-Bindemittel in einer Menge von 1 - 10 Gew.-% der Zusammensetzung, das das Gemisch in Granulatform hält;

die Granulat-Zusammensetzung, die das biologisch aktive Material vor den abbauenden Wirkungen von Sonnenlicht und Sauerstoff, der auslaugenden Wirkung des Wassers und den verflüchtigenden Wirkungen von Wind und Sonne schützt, während es die langsame Freigabe des biologisch aktiven Materials ermöglicht, so daß die Zeitdauer, während der es wirksam ist, über einen wesentlich längeren Zeitraum erstreckt wird, als wenn es allein direkt auf den Boden aufgebracht würde.

15. Zusammensetzung nach einem der Ansprüche 1 bis 14, wobei das biologisch aktive Material der herbizide Stoff 2,4-Dichlorphenoxyessigsäure oder der herbizide Stoff Hexazinon ist.

WEED INVASION OF THE SOIL SURFACE OF POTTED DOUGLAS FIR

FIG. 1

GROWTH HISTORY CURVES OF DOUGLAS FIR SEEDINGS

FIG. 2

% SOIL SURFACE WEED COVER

25   50   75   100

WEED CONTROL

CONTROL (f)

2,4-D (g)

2,4-D/KL (c)

2,4-D MELAMINE/UREA (a)

2,4-D MELAMINE/RESIN (b)

2,4-D/MELAMINE/VELPAR® HERBICIDE (e)

MELAMINE/VELPAR® HERBICIDE (d)

TREATMENTS

TIME-24 WEEKS AFTER TREATMENTS

FIG. 3

GROWTH INCREASE cm

25   50   75   100

COMPARATIVE GROWTH

CONTROL (f)

2,4-D (g)

2,4-D/KL (c)

2,4-D MELAMINE/UREA (a)

2,4-D MELAMINE/RESIN (b)

2,4-D MELAMINE/VELPAR® HERBICIDE (e)

VELPAR® HERBICIDE MELAMINE/RESIN (d)

TIME-24 WEEKS AFTER TREATMENTS

FIG. 4

35